# EUROPEAN PATENT SPECIFICATION

(11) **EP 2 450 991 B1**
(45) Date of publication and mention of the grant of the patent: **17.07.2013**
(21) Application number: 11185532.6
(22) Date of filing: 18.10.2011
(51) Int. Cl.: H01M 6/52, H01M 10/54, C22B 15/00, C22B 47/00, C22B 23/00, C22B 7/00, C22B 26/12

(54) **Plant and process for the treatment of exhausted accumulators and batteries**
Anlage und Verfahren zur Behandlung von Akkus und Batterien nach Ablauf ihrer Lebenszeit
Installation et procédé pour le traitement d'accumulateurs et de batteries usagés

(30) Priority: 18.10.2010 IT RM20100551
(43) Date of publication of application: 09.05.2012
(73) Proprietor: ECO Recycling s.r.l., 01033 Civita Castellana (VT) (IT)
(72) Inventor: Toro, Luigi, 01033 Civita Castellana (VT) (IT); Veglio, Francesco, 01033 Civita Castellana (VT) (IT); Beolchini, Francesca, 01033 Civita Castellana (VT) (IT); Pagnanelli, Francesca, 01033 Civita Castellana (VT) (IT); Furlani, Giuliana, 01033 Civita Castellana (VT) (IT); Granata, Giuseppe, 01033 Civita Castellana (VT) (IT); Moscardini, Emanuela, 01033 Civita Castellana (VT) (IT)
(74) Representative: Raimondi, Adriana

(56) References cited:
- WO-A1-2005/101564
- US-B1- 6 835 228
- LEE C K ET AL: "Reductive leaching of cathodic active materials from lithium ion battery wastes", HYDROMETALLURGY, ELSEVIER SCIENTIFIC PUBLISHING CY. AMSTERDAM, NL, vol. 68, no. 1-3, 1 February 2003 (2003-02-01), pages 5-10, XP004409415, ISSN: 0304-386X, DOI: DOI:10.1016/S0304-386X(02)00167-6
- LI J ET AL: "A combined recovery process of metals in spent lithium-ion batteries", CHEMOSPHERE, PERGAMON PRESS, OXFORD, GB, vol. 77, no. 8, 1 November 2009 (2009-11-01), pages 1132-1136, XP026699768, ISSN: 0045-6535, DOI: DOI:10.1016/J.CHEMOSPHERE.2009.08.040 [retrieved on 2009-09-22]

## Description

### Field of the Invention

The present invention refers to a process and a plant for the treatment of exhausted batteries. In particular, the invention relates to a process to enhance the value of all the batteries different from the alkaline and zinc-carbon ones and lead accumulators. The process of the invention allows treating mainly exhausted batteries and accumulators based on lithium (accumulators lithium-ion among which the lithium polymer ones and lithium primary batteries) and nickel (nickel metal hydride) and it is aimed at salvaging the main components of these devices (Li, Co, Al, Ni, Mn, and the like).

In the proposed recycling process most of the metallic valuable materials contained in the waste are salvaged both by means of physical processes and by chemical treatments. The process is particularly inexpensive as a large number of products is recovered and gaseous emissions and the effluents leaving the plant are reduced to a minimum, thanks to the use of liquid-phase reactions and to re-circulating the plant's outlet currents, which are used again inside the plant itself or are used in alternative ways as secondary raw materials.

### Prior Art

During the last few years the use of batteries and accumulators based on lithium and nickel has been constantly increasing and for this reason the end-of-life treatment of such devices is gaining more and more attention, both from the economic and from the environmental point of view. The primary-lithium batteries are devices that contain metallic lithium and manganese dioxide (MnO₂) as the electrode material. The lithium ion accumulators are devices with a LiCoO₂-based cathode supported by aluminium (less commonly can anyway be found also LiNiO₂ - and LiMnO₂ -based cathodes) and with graphite anodes supported by copper. The nickel-metal hydride devices instead contain about 30% of nickel in weight.

The cathode of a nickel-metal hydride battery is made of nickel hydroxide, while the anode is made of an inter-metallic compound, which usually is of the AB₅ formula, wherein A is a mixture of elements of the rare-earths group such as lanthanium, cerium, neodymium, praseodymium and B is nickel, cobalt, manganese and/or aluminium.

During the treatment processes for exhausted batteries problems of environmental impact may arise which are due to the presence of significant amounts of heavy metals. Batteries, as a matter of fact, are to be considered as a special waste and, according to the Law, must be disposed of in a controlled dumping ground, this type of disposal is very expensive for the community. On the contrary, it is exactly their metal content that makes exhausted batteries interesting as a source of secondary raw materials. There exist different methods in the literature for salvaging metals from exhausted batteries. Such processes are essentially of two types: pyrometallurgical and hydrometallurgical.

Pyrometallurgical processes carry out a selective volatilization of metals at high temperature, followed by a re-condensation phase. They are characterized by high costs.

Hydrometallurgical processes are characterized by a smaller energetic consumption and by a smaller environmental impact with respect to the pyrometallurgical ones. A wide margin for improvement can be found in the field comprising these processes.

The different hydrometallurgical processes are all characterized by a pre-treatment aimed at classifying, disassemblying and magnetically separating the various components. Then, a leaching operation is carried out, usually in an acidic reducing environment. The different processes can be distinguished by the reducing agent used and by the recovery methods of the different metals from the liquid bath used for the treatment, also called leach liquor.

The processes described in the literature do not allow the recovery of the same number of products nor allow the recovery from any mixture, in particular starting from batteries of different nature, of metallic elements with a high purity grade. In addition, in the known processes the amount of recovered material is not satisfactory and even significant amounts thereof are left behind in the form of industrial muds or wastes and manufacture residues, which in general are not further treated. Finally, a particularly important detail resides in the fact that there exist no flexible processes capable of treating at the same time different types of batteries and accumulators.

Table 1 shows the main features of a hydrometallurgical process of the prior art as compared to the one of the present invention.

**Table 1**

| Comparison between the proposed process and the process described in WO2005/101564 | | | | |
|---|---|---|---|---|
| **TREATMENT** | W02005/101564 | | **PROPOSED PROCESS (Preferred Conditions)** | |
| Mechanical/thermal pre-treatments | Grinding + crushing | Grinding + crushing under Ar o CO₂ atmosphere or a mixture of both | Thermal pretreatment under inert N₂ Crushing followed by primary screening (1 mm). Crushing followed by secondary screening | |
| Mechanical separation | Vibrating screen (3mm) Magnetic Separator Densimetric Table (4 fractions) | | Magnetic separation (Iron) Thermal or Gravimetric Treatment (paper and plastic) Densimetric Table (Cu) | |
| Rinses | 500 micron screening Rinse under strong agitation of the fines in water, to help the oxide release. The pH 12 solution contains Lithium | | | |
| Lithium Recovery | Precipitation of Lithium as a Carbonate | Precipitation as litium phosphate | Lithium is finally recovered from the solution coming from the Mn dioxide precipitation The solution is acidified by addition of a 2-4 M H₂SO₄ solution to pH 5-6 and then additioned with a saturated solution of Na₂CO₃ to pH 8-9 | |
| Leaching | Sulphunc acid 2N at 80°C in the presence of steel beads | | 2g/g H₂SO₄ + natural organic reducing agent, from waste sources, 70-90°C | |
| Leach purification | Cementing Cu with steel Neutralization with 20% lye Precipitation of iron as an hydroxide | | Fe/Al removed by means of precipitation at pH 5,5 Multiple solvent extractions using a phosphinic acid derivative as the solvent for the selective separation of Co and N1 | |
| Co recovery | The purified solution at pH 5 is used for the electrodeposition of cobalt (if both Mn and Co are in the solution) | If batteries are lithium ion only, after leach purification cobalt is precipitated at pH 2.3-2.8 with sodium hypochlonte as cobalt hydroxide (III) | Recovery of cobalt in the metallic form with >99% purity by means of electrolysis at milder operative conditions | Cobalt can be recovered in the form of CoSO₄ by means of crystallization (cobalt content about 21%) or either as CoCO₃ by means of precipitation with Na₂CO₃ |
| | Electolysis is carried out at 55°C with a current density between 400-600 A/m² using a stainless steel cathode and an antimony-lead anode. | | | |
| N1 Recovery | | | Nickel is recovered by electrolysis in its metallic form. | Chemical recovery in the form of carbonate. |
| Mn recovery | Manganese is precipitated as an oxy- hydroxide then the acidified solution poor in Co and Mn is used agam in the process (if mixed primary batteries and lithium ion) | | Manganese dioxide By adding NaOH to pH 9 and in oxidative conditions by bubbling air from bottom of reactor | |
| Recovery of other metals | Neutralization with lye to pH 8,5 to recover the metals left. | | | |
| Waste waters treatment | The soluzion is then sent to the waste waters treatment (lithium recovery as a phosphate). | | 75% of re-circulation of the flues coming from the plant. Re-circulation preceded by crystallization. Treatment with ion exchange resins for the part introduced into the water bodies. | |

Disadvantages of the process of WO2005/101564 as compared to the proposed process
a) The process described in WO2005/101564 does not mention nickel among the metals present in the waste and thus in the treatment process. Since the cathode material is made of nickel, even though less frequently than cobalt, and since nickel and cobalt have extremely similar chemical properties, the products based on cobalt made by means of the described process will be contaminated by nickel;
b) The process described in WO2005/101564 is little flexible as it is limited to the treatment of lithium-based devices;
c) The process described in WO2005/1015 allows the recovery of a smaller number of products and with a lower purity grade.

### Summary of the Invention

It has been developed and is the object of the present invention a process that overcomes the above-mentioned disadvantages.

The process and the plant which allows carrying it out are described in the appended claims and Figures.

In particular, the process of the invention refers to the treatment of all types of accumulators and batteries different from the alkaline, zinc-carbon ones and lead accumulators. The innovation entails the recovery of material in terms of Co, Li, Ni, Mn and Al by means of chemical treatments, and plastics and copper by means of physical treatments.

These materials are recovered with a high purity grade and can advantageously be used again either for the manufacture of new cathode material or for other uses.

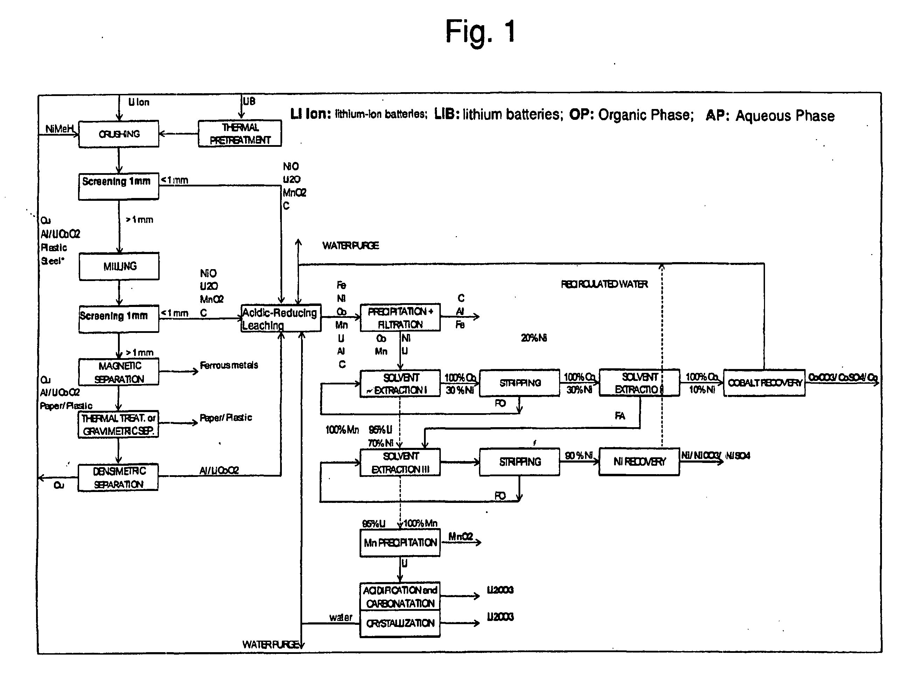

The process of the invention belongs to the hydrometallurgical type and comprises a chemical route entirely in common between the different waste types and a preliminary physical route which is not in common only for the initial thermal pre-treatment of the primary-lithium batteries. Such routes are diagrammatically represented in Figure 1.

Another object of the invention is the plant to carry out the process of the invention.

Further objects of the invention will be evident from the detailed description of the invention.

### Brief Description of the Figures

Figure 1 shows a block diagram which schematically represents the process according to the invention.
Figure 2 shows a graph of the economical potential of the proposed innovation.
Figure 3 shows a block diagram which schematically represents an alternative embodiment of the process according to the invention to be carried out preferably when in the presence of high manganese contents.

### Detailed Description of the Invention

The process according to the invention applies mainly to the lithium-ion accumulators, to the nickel-metal hydride ones and to primary-lithium batteries.

The lithium-ion accumulators make use of a LiCoO₂-based cathode which adheres to aluminum, even though a small number of cathodes which are made of nickel or manganese instead of cobalt are available on the market. The anode of such devices, on the contrary, is made of graphite supported by copper sheets, or batteries whose electrochemical functioning is based on the following reaction:

LiCoO₂+C₆ ↔ Li₁₋ₓCoO₂+LiₓC₆

These devices are 35% made of LiCoO₂.

The nickel-metal hydride accumulators are, on the contrary, based on the reaction:

H₂O + M + e⁻↔ OH⁻+ M-H

Where M usually is an intermetallic compound based on nickel. These devices contain about 40% by weight of nickel and an alkaline electrolyte often based on potassium hydroxide.

The primary-lithium batteries contain instead a metallic lithium-based cathode and an anode based on MnO₂ thermally treated at 300-350°C with the aim to obtain an anode surface that is activated and capable of hosting Li⁺ ions after their oxidation at the anode. Following discharge, the lithium ions enter the manganese dioxide channels originating solid solution of the LiₓMnO₂ type.

Where not otherwise indicated, the steps of process and their respective operating conditions and the corresponding actuating devices for the making of the plant are within the reach of the person expert in the field, which, together with the present description, is able to carry out the invention.

The process of the invention comprises in a cooperating relationship the steps as detailed below (in the following, "step" or "section" are used as synonyms). It is shown in the block diagram of Figure 1 and briefly described in the following operations:
- Grinding, primary screening (1 mm), secondary crushing of the >1 mm fraction and secondary screening (1 mm) and obtaining two fractions: one having a diameter of less than 1 mm and rich in MnO₂, NiO, Li₂O and graphite, the other one having a diameter > 1mm and rich in Cu, Al, and LiCoO₂. A mild thermal treatment (300°C, 1 h), for the combustion of paper and plastic, a magnetic separation of the ferrous metals and a densimetric separation of copper from Al/LiCoO₂ by means of a reciprocating table are carried out on the raw fraction. By means of this route, copper is directly recovered as the product, while the LiCoO₂ onto Al is fed into the metallurgy section of the plant together with the fractions< 1 mm enriched with Ni, Li e Mn.

In the hydrometallurgical section of the plant are carried out the operations of:
- Acidic-reducing leaching, preferably using a carbohydrate as the reducing agent chosen from the group comprising monosaccharides, oligosaccharides, polisaccharides and mixtures thereof, also coming from agri-food wastes;
- Primary purification of the leach liquor by means of precipitation of Fe and Al hydroxides at pH 4-7, preferably pH 5.0-5.5. The Fe²⁺ and Al³⁺ ions if present in the leach liquor would interfere with the following operation of solvent extraction. Alternatively, aluminium can be separated before leaching by means of an alkaline rinse and recovered in the form of alum by precipitation with NH₄OH;
- Secondary purification by separation of cobalt by means of solvent extraction (phosphinic acid derivative). By means of two or three successive extraction and stripping cycles (their precise number depends from the leach liquor composition, and thus from the feeding), a progressive enrichment in cobalt of the aqueous phase is obtained. This result can be obtained thanks to the use of a solvent that is a derivative of phosphinic acid whose extraction selectivity with respect to the different metals increases in the order Li⁺<Cu²⁺<Ni²⁺<Co²⁺<Al³⁺. At the end of this extraction operation followed by acidic stripping, preferably with H₂SO₄ 2-4 M at the volume ratio 1:1, two distinct aqueous phases are obtained, one that is enriched with nickel, the other one with manganese and lithium. The intermediate aqueous phases, still containing high nickel concentrations, are recirculated at the head of the extractor for the separation of nickel.

At the end of this extraction operation two different aqueous phases are obtained, one is enriched with cobalt (plus possible manganese impurities where the separation and recovery operations for manganese are not previously carried out) and another one containing Ni and Li which is sent to the nickel recovery.

In the case where the concentration of nickel is at least 5 fold higher with respect to cobalt, it will be necessary to make one or more extractive cycles (extraction and stripping). The intermediate aqueous phases (after a possible re-concentration, tipically by evaporation) are sent to a new extractive line for the separation of nickel from manganese. The solvent extraction for the separation of nickel from manganese uses the same solvent based on phosphinic acid, used for the extraction of cobalt. At the end of this extraction operation followed by acidic stripping, preferably with H₂SO₄ 2-4 M at a volume ratio 1:1, two distinct aqueous phases are obtained, one enriched with nickel, the other one with manganese and lithium.

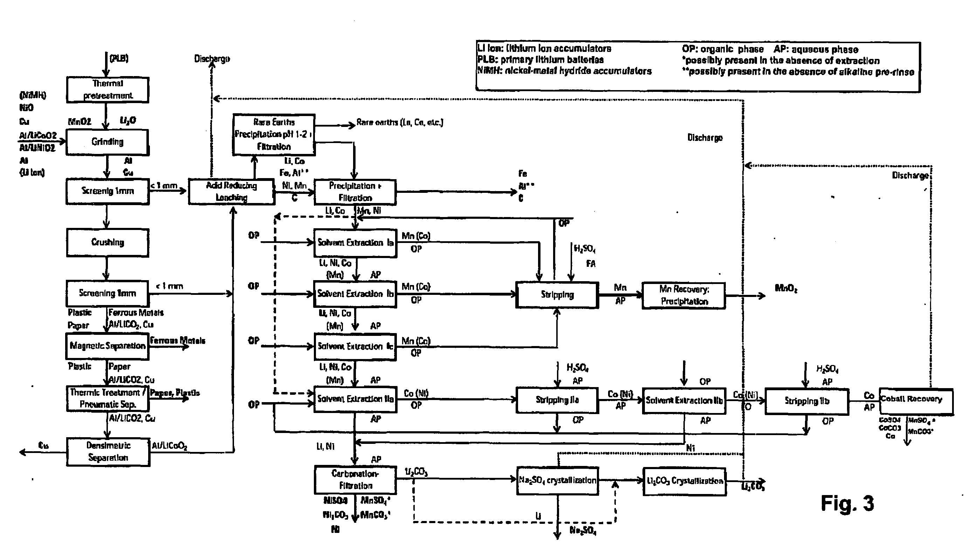

In case the mixture of batteries fed to the plant causes a concentration of Mn (Mn²⁺) in the leach higher than 3 g/l, or if high-purity cobalt and nickel products are to be obtained which are free from manganese, the separation of cobalt should be preceded by the separation of manganese (Figure 3). This operation can be carried out by means of an extraction with an organic apolar aprotic solvent, preferably kerosene, in the presence of a complexing agent, preferably a phosphoric acid derivative, by means of multiple extractive steps wherein the number of steps increases as a function of the manganese concentration to be separated, and, advantageously, a final stripping of all the organic phases.
- Recovery of cobalt in the metallic form, with a purity > 99% by means of electrolysis. Alternatively, cobalt can be recovered in the form of a sulphate by means of crystallization (cobalt level about 21%) or either as a high purity grade carbonate by means of a precipitation with Na₂CO₃. The spent electrolytic solution is almost entirely made to recirculate at the head of the leaching reactor with a consequent reduction of the effluents to be sent to disposal and with a sparing of sulphuric acid which is produced in the electrolytic cell itself. The electrolytic discharge material can be used to produce CoCO₃.
- Nickel recovery (purity >99%) by means of electrolysis. Alternatively, the nickel can be recovered in the form of sulphate by means of crystallization or precipitation as high purity grade carbonate. The spent electrolytic solution is almost entirely made to recirculate at the head of the leaching reactor with a consequent reduction of the effluents to be sent to disposal and with a sparing of sulphuric acid which is produced in the electrolytic cell itself. The electrolytic discharge material can be used to produce NiCO₃.
- Manganese recovery in the form of dioxide by means of precipitation at alkaline pH, preferably pH 8-11, more preferably at about pH 9, by adding NaOH under air fluxing.

Manganese can also be precipitated by adding carbonate, the purity of the manganese carbonate (MnCO₃ depends on the amount of lithium present in the solution which is linked to the composition of the batteries that are fed to the plant.

Manganese recovery is carried out on the aqueous current which leaves the recovery section by solvent extraction of nickel (Figure 1) or, in the case where Mn concentration is higher than 3 g/l, directly onto the current coming from the solvent extraction for the manganese recovery (Figure 3), preceded by a possible evaporation concentration as a function of the number of extraction steps carried out.
- Lithium recovery by means of precipitation and/or crystallization as a function of the lithium concentration in the leach liquor.
- To avoid an excessive accumulation of sodium sulphate which would bring to its precipitation it is envisaged a periodical crystallization treatment on the effluents coming from the electrode chambers before recycling into the leaching reactor. Part of the solution that comes from the electrolytic chambers undergoes a treatment based on ion-exchange resins, the remainder is re-circulated as it is inside the leaching reactor.
- Alternatively, the effluents coming from the electrolytic chambers can be treated by means of an oxidation process which employs hydrogen peroxide in combination with Fe(II) salts (which has the function of a catalyst) called Fenton's process (Ullmann's Encyclopedia of Industrial Chemistry, Fifth Editi*on).* During this process, oxidation of the organic compounds takes place by means of the formation of highly reactive chemical intermediates such as oxygen radicals. The main function in the process is that of degrading the organic part possibly present.

The process is composed by a section of preliminary physical operations, necessary to the preparation of waste and to the recovery in particular of copper and rough aluminium, and of a second section of chemical operations aimed at extracting and recovering the other metals of interest. The operations are described more in details in the following.

### (1) Physical Preliminary Operations

### (1.a) Thermal Pretreatment - Crushing - Screening I

During the crushing operation, exhausted batteries and accumulators are opened by means of a blade-crusher with two or four shafts, thus undergoing a rough reduction of their size. This entails a partial release of the different components contained in these devices (metallic iron and non-iron materials, paper/cellulose and plastic materials). Since the electrolytes and the metallic lithium still present in the primary-lithium devices can spark off dangerous fires and explosions, it is convenient to pre-treat such devices before their crushing. Alternatively, the thermal treatment can be carried out on the whole battery mixture thus avoiding a pre-selection of the primary-lithium ones. The pre-treatment is carried out thermally by submitting the primary-lithium batteries to a temperature of 300-400°C for about 1 hour. In this phase, it is advantageous to make the oven inert by fluxing nitrogen until the working environment is almost totally saturated. By means of a pressure controller one operates both on a discharge valve to avoid excessive pressure increases and on the nitrogen input flux to keep its pressure constant inside the furnace after the discharge. Once this operation has been carried out on the primary-lithium devices, it is possible to put the product coming out of the furnace together with the other types of devices which are the object of the invention and to carry out the above mentioned crushing. This type of pre-treatment allows one to avoid the use of inert crushers which, due to their construction properties, need very big amounts of gas to be made inert. A very important functional feature of this operation is the absence of control grids in the crusher with two-four shafts. This solution reduces the permanence time of the charge in the crusher, avoiding fires due to the flammable solvents of the lithium-ion accumulators and thus allowing crushing such devices without making the equipment inert or preliminary treatments.

A first screening operation with a 1 mm-screen is envisaged on the output of the crusher. This operation allows the separation of a powder rich in the electrode elements of the nickel-metal hydride accumulators (35% of the total powder) and in those from the primary-lithium batteries (22% of the total powder), i.e.: nickel oxide, lithium oxide, manganese dioxide. The > 1 mm fraction, instead, is mainly made of all the iron and non-iron shells only partially opened and thus still containing powders.

### (1b.) Grinding - Screening II - Magnetic Separation

The > 1 mm fraction sequentially undergoes a second dimensional reduction operation, for example by means of a cutting or hammer mill with a control grid at 1 cm and a second screening operation at 1 mm. These two sequential operations allow the recovery of about 100% of the electrode powders contained in the primary-lithium batteries and in the nickel-hydride accumulators from the < 1 mm fraction (later sent to the hydrometallurgical treatment). The > 1 mm fraction on the contrary, contains iron and non-ferrous metals and which come from the external containers, as well as copper sheets, paper/plastic and aluminium sheets with LiCoO₂ coming from the lithium-ion accumulators. A subsequent magnetic separation operation allows the recovery of the ferrous metals contained in the > 1 mm fraction (about 65% in weight of the total).

### (1c.) Thermal treatment/Pneumatic separation/Rinse

Since the non-magnetic fraction contains paper/plastic (dielectric accumulators lithium-ion) in small amounts (1-2% in weight) but anyway able to make difficult if not impossible the subsequent separation of copper from aluminium, an operation to remove this material is carried out. This is carried out by means of a thermal treatment of the fraction coming from the magnetic separator at about 300°C for 30-60 min, which causes the complete combustion of the dielectric. Alternatively, it is possible to obtain the same result by means of a gravimetric pneumatic separator with a "zig-zag" ingoing piping set at 35° of slope and with a frequency comprised between 3000 and 4000 Hz.

### (1d.) Densimetric Copper-aluminium Separation

The output fraction of the thermal treatment is almost entirely made of copper and of aluminium sheets with LiCoO₂ coming from the lithium-ion accumulators. This fraction undergoes a densimetric separation by means of a pneumatically assisted densimetric table. Copper (35-40% in weight of the input) is a clean, ready to use product, while the aluminium/ LiCoO₂ is sent to the hydrometallurgical section of the plant, also with a prior mixing with the < 1 mm powders previously separated.

### (2) Chemical Extraction and Recovery Operations

### (2.a) Leaching

The fraction sent to the leaching operation mainly contains Ni, Mn, Li, Co, Al and graphite.

The leaching operation is carried out under stirring, at a temperature of at least 60°C and in acidic conditions, preferably at a sulphuric acid and powder ratio of 2:1 (2 grams of acid per gram of powder). The reducing conditions are fundamental for carrying out the solubilization of cobalt and manganese through their reduction from Co³⁺ to Co²⁺ and from Mn⁴⁺ to Mn²⁺. These reducing conditions can be obtained according to the knowledge of the technical person in the field, preferably they are carried out using hydrogen peroxide or polyoxydrylated organic compounds, such as monosaccharides, oligosaccharides, polysaccharides and mixtures thereof. With the term monosaccharides it is meant any polyoxydrilated aldehyde or chetone comprising between 3 and 7 carbon atoms and derivatives thereof such as, e.g., compounds wherein the group CHOH is substituted by the group CH₂. Preferred ones are glucose, fructose, mannose, galactose and hexose, pentose and triose sugars in general, possibly coming from polysaccharide hydrolysis processes. With the term oligosaccharide it is meant any carbohydrate comprising between 2 to 10 monosaccharide units, linked to each other by means of glycosidic bonds. Preferred ones are lactose, cellobiose, sucrose, maltose. With the term polysaccharide it is meant a carbohydrate comprising more than 10 monosaccharide units. Preferred ones are cellulose products in general, such as paper mills wastes, molasses, starches, milk whey, olive vegetation waters and their corresponding hydrolysis products.

As indicated above, manufacture wastes and very polluting agri-food and paper mills refluents which are difficult to be disposed of can be advantageously used as the reducing agents.

Because a quantitative reduction of Co³⁺ and Mn⁴⁺ tales place, it is necessary to use at least 0.1 g of a carbohydrate CHOH unit per gram of powder, which correspond to an about 50% stoichiometric excess in terms of glucose, according to the following reaction (simplified):

8LiCoO₂ + 8MnO₂ + 20H₂SO₄ + C₆H₁₂O₆ = 8CoSO₄ + 4Li₂SO₄ + 8MnSO₄ +6CO₂ + 26H₂O

The temperature needed to obtain the maximum extraction yield of cobalt and manganese is preferably 70-90°C. In such conditions, and using a solid-liquid 1:3-1:5 ratio the reaction requires about 2-3 hours and yields a quantitative extraction of cobalt (60-70 g/l) of lithium (80-100 g/l) of manganese (50-60 g/l and of nickel (60-70 g/l) The thus produced leach can also contain Cu, Fe and Al in varying concentrations according to the initial composition of the sample of batteries to be treated.

Before the leaching operation it is possible to envisage a phase of alkaline rinse in order to recover aluminium. Such a rinse is carried out at an alkaline pH, for example with NaOH 0.1-0.5 M (pH 12.5-13) for about 2 hours, with the aim to selectively extract aluminium thanks to its amphoteric properties. To recover it, it is subsequently brought to an acidic environment, preferably with H₂SO₄ (2M, 1h, 60-70°C) and precipitated with NH₄OH in the form of alum.

### (2.b) Recovery of Rare Earths

The leach liquor produced in the preceding step can be sent to a recovery section for rare earths (lantanium, cerium, neodymium, praseodymium). The recovery is carried out by means of a precipitation thanks to the addition of alkaline agents to pH values comprised in between 0.8 and 3.0, preferably in between 1.5 and 3, more preferably 1.0-2.0

### (2.c) Iron Removal

The leach liquor produced in the preceding step is sent to the next quantitative iron removal operation, and is precipitated as the hydroxide thanks to the addition of alkaline agents up to pH values comprised in between 4 and 5.5, preferably 4.5 and 5. In this phase, in case the alkaline rinse is not performed before leaching, also aluminium is removed in the form of hydroxide. The solids are separated from the solution by means of filtration in a filter press wherein the solid residues from the leaching can be used as filtration adjuvants for the cake formation.

### (2.d) Cobalt Separation

The post-precipitation solution, free from iron and aluminium, undergoes a solvent extraction operation (liquid-liquid) by means of the use of a complexing agent in the organic phase. The complexing agent is a phosphinic acid in an organic apolar aprotic solvent (typically kerosene and similar). By using this extraction solution in a volume ratio preferably of 1:1, the selective separation of cobalt is determined through its transfer from the aqueous phase to the organic one. Thanks to the extraction selectivity of this solvent, which grows in the order Li⁺<Cu²⁺<Ni²⁺<Co²⁺<Al³⁺, cobalt is extracted by 97%, while Ni is extracted with a yield of about 30-40% with respect to the starting concentration. According to the nickel and cobalt concentration in the leach liquor, the extraction operation is repeated 2 or 3 times so that a final aqueous solution enriched in cobalt and containing less than 2% of nickel is obtained. The possible intermediate aqueous phases, still containing high concentrations of nickel, are recirculated at the head of the extractor for the separation of nickel. The first-extraction refined product, which contains nickel, manganese and lithium sulphates, undergoes a new extraction to separate nickel. The extraction steps can vary between 1 and 2 so that an extract enriched in nickel but containing less than 5% manganese is obtained.

In case the mixture of batteries to be treated yields a leaching liquor with a manganese concentration (Mn ²⁺) higher than 3g/l or anyway, if high purity cobalt products free from manganese are desired, before proceeding with the cobalt separation as described above it will be convenient to envisage a manganese separation phase by means of solvent extraction.

### (2.e) Cobalt Recovery

Solvent extractions allow obtaining a final concentrated cobalt solution substantially free from other metals (with an impurity content lower than 2%) and, thus, able to give, by means of appropriate operations, high purity grade products.

Cobalt recovery can be carried out in three different ways: metallic cobalt recovery by means of electrolysis, cobalt carbonate recovery by means of precipitation and recovery of cobalt sulphate by means of crystallization.

### (2.e.1) Electrolytic Recovery

The electrolytic process can be simplified in the total reaction:

2CoSO₄ + 2H₂O = Co + O₂ + 2H₂SO₄

This reaction is carried out in potentiostatic conditions working with a cathode potential comprised in between 0.9 V and 1.3 V, which vary based on the cathode material used as the working electrode and based on the geometry of the cell. The Energy consumption associated with this operation is 2,8 kWh/kg Co with a faradic current yield higher than 90%. This operation is carried out at pH 4-4.5, at room temperature and under moderate stirring using carbon steel as the cathode and graphite as the anode. At the graphite takes place the reaction of water oxidation with production of gaseous oxygen and acidity which can advantageously used of by means of re-circulating the spent electrolysis solution in the leaching reactor. The electrolytic cell envisages a pneumatic stirring system which is able to give better performances with respect to the more common mechanic agitation and also envisages a filtration and continuous re-circulation system of the electrolytic solution. The metallic cobalt thus produced, purified by means of solvent extraction, shows a > 99 % purity and can be marketed at prices comprised in between 30 and 40 euro per kilogram.

### (2.e.2) Chemical Recovery by Means of Cobalt Carbonate Precipitation or by Means of Cobalt Sulphate Crystallization.

As an alternative to the electrochemical recovery, cobalt can be recovered by a chemical route by means of precipitation and/or crystallization, also evaluating the best route based on the prices of the products obtained.

The precipitation takes place by carbonation with sodium carbonate, according to the reaction:

Na₂CO₃ + CoSO₄ = CoCO₃ + Na₂SO₄

The yields of such a reaction are higher than 95% and the amorphous cobalt carbonate thus produced can reasonably be separated from the residual solution by means of filtration. Thanks to the preliminary solvent extraction which allows a practically complete separation between cobalt and nickel, the cobalt rate in such a product is comprised in between 49 and 50% in weight and can then be marketed at a price corresponding to about 40 €/kg.

If a more crystalline product is desired, cobalt can be recovered in the form of a sulphate salt by crystallization. This operation requires that the solvent (water) be partially evaporated and subsequently cooled. This way, the formation of CoSO₄xH₂O crystals is determined with a rate that increases with the over-concentration and the under-cooling. The optimal crystallizing conditions entail an over-concentration of CoSO₄ up to 250-300 g/l (corresponding to the evaporation of 80-85% of the water volume) and cooling down to 5°C. By carrying out this operation in the absence of the preliminary solvent extraction that is capable of separating cobalt from nickel, the formation of a CoSO₄xH₂O product containing only 16-17% of cobalt in weight (a product that can be marketed but has no current pricing) is determined, while by upstream purification of the leach liquor by means of the solvent extraction, the cobalt rate in the product goes up to 21%, with a notable increase in its market price up to 30-35 €/kg.

### (2.f) Nickel Recovery

Nickel can be recovered by electrolysis in the metallic form or chemically in the form of carbonate. The electrochemical recovery is carried out by working at cathode potentials comprised in between - 0.9 and -1.3 V and by operating at pH values comprised in between 4 and 5, at the temperature of 30-40°C. The electrodeposition of nickel in these conditions is carried out onto a steel cathode with nickel (mostly for the sake of adherence of the deposited material) with a faradic yield of 95% and with an energy consumption of about 2.5 kWh/kg.

Nickel recovery can, alternatively, follow the chemical route of carbonation-precipitation with sodium carbonate, according to the reaction:

Na₂CO₃ + NiSO₄ = NiCO₃ + Na₂SO₄

The yields of this reaction are higher than 95% and the amorphous nickel carbonate thus produced can be easily separated from the residual solution by means of filtration. Thanks to the preliminary extraction with solvent, which allows a practically total separation between cobalt and nickel, the rate of nickel in such a product is comprised in between 49 and 50% in weight and, therefore, it can be put on the market at a price of about 25-30 €/kg.

### (2.g) Manganese Recover

The refined material coming from the extraction operation with solvent containing manganese and lithium, is alkalinized at pH 8-10 in oxidizing conditions by bubbling air from the bottom of the reactor. These operations bring to the formation of MnO₂ according to the reaction:

2MnSO₄ + 4NaOH + 02 → 2MnO₂ + 2Na₂SO₄ + 2H₂O

The manganese dioxide that is formed is insoluble, therefore the precipitate based on manganese is separated from the solution by means of a filtration in a filter press. Lithium, which forms a soluble hydroxide, in the contrary stays in solution and is sent to the following step.

Manganese can also be precipitated by means of carbonate addition, the purity of the manganese carbonate (MnCO₃ depends on the amount of lithium present in the solution which is linked to the composition of the batteries fed to the plant.

The manganese recovery is carried out on the aqueous output current from the recovery section by solvent extraction of nickel or, in the case where the composition of the mixture of batteries to be treated shows a manganese concentration in the leach liquor higher than 3 g/L, directly on the current coming from the solvent extraction for the manganese recovery.

### (2.h) Lithium Recovery

The solution coming from nickel precipitation is firstly acidified by means of the addition of a 2-4 M H₂SO₄ solution to pH 7-8 and, in the case where nickel recovery was performed by the electrochemical route, added with a saturated solution of Na₂CO₃ to pH 8-9 according to the reactions:

2LiOH + H₂SO₄ → Li₂SO₄ + 2H₂O

Li₂SO₄ + Na₂CO₃ → Li₂CO₃ + Na₂SO₄

Since lithium carbonate has a solubility of about 6 g/l at 25°C, after carbonation the conditions for an over-saturation are created (about 60 g/l of Li₂CO₃) so that the precipitation in the form of carbonate of about 85% of the lithium in the solution is allowed. After this first phase about 50% of the water volume is evaporated determining new over-saturation conditions which allow the crystallization of further lithium carbonate to a total recovery of about 90-95% of the initial lithium content.

The lithium carbonate that is obtained from the double precipitation-crystallization operation contains less than 1% of impurities in weight.

The Li recovery operation could otherwise be facilitated by introducing upstream of the precipitation-crystallization an inverse osmosis operation, wherein the solution coming from the nickel recovery is possibly acidified, concentrated by inverse osmosis and then sent to the precipitation reactor.

### (3) Treatment of the solutions to be recirculated

To avoid the excessive accumulation of sodium sulphate, which would bring to its precipitation, a periodical crystallization treatment is envisaged on the effluents coming from the electrode chambers before recycling in the leaching reactor. Crystallization is periodically carried out by evaporating about 50% of the water volume to be recirculated and by subsequently cooling this current at the temperature of 10-15°C. This operation allows keeping the sodium sulphate concentration constantly below the saturation concentration. The sodium sulphate that is removed with this operation can constitute a sub-product of the present process.

Part of the output solution from the electrolytic chambers undergoes a treatment based on ion-exchange resins before being sent to the water bodies, the remaining part is recirculated as it is inside the leaching reactor or preventively sent to the crystallizer for the removal/recovery of the sodium sulphate.

Alternatively, the effluents coming from the electrolytic cells can be treated by means of an oxidation process that employs hydrogen peroxide in combination with Fe (II) salts (which function as the catalyst) called Fenton process (Ullmann's Encyclopedia of Industrial Chemistry, Fifth Editi*on).* During this process the oxidation of organic compounds happens by means of the formation of highly reactive chemical intermediates such as oxygen radical species. The main function in this process is degrading the organic part possibly present in the effluents.

The process of the invention can be carried out in a plant comprising the following sections (or steps):
(1) Pretreatment, comprising crushing means; screening means; washing reservoirs and/or reactors;
(2) Leaching, comprising reactors possibly provided with stirring means; reagents feeding means; recirculation means and filtration means; heating means;
(3) Separating Fe e Al comprising reactors possibly provided with stirring means; reagents feeding and pH control means;
(4) Separating Mn, Co, Ni, Li, comprising devices and means for the solvent extraction and re-extraction of the extracts; electrodeposition devices and means; recirculation means and filtration means; stirring reactors for the chemical deposition and devices for the crystallization;
(5) Treating the solutions to be recirculated by means of ion-exchange resins and/or chemical-physical treating of the Fenton type.

Tables 2, 3, 4 contain the listing of the equipment needed for carrying out the process (devices for physical treatments, reactors and filter presses) with their dimensions and/or load rates in case 1000 or 2000 t/y (tonnes per year) of end-of-life batteries and accumulators are treated.

**Table 2**

| Main Equipment for Chemical Operations and their Dimensions | | |
|---|---|---|
| | **Volume (m³)** | |
| **Equipment** | 1000 t/y | 2000 t/y |
| CSTR Leaching | 8 | 16 |
| Extractor I | 16 | 33 |
| Stripper I | 10 | 19 |
| Extractor II | 16 | 33 |
| Stripper II | 10 | 19 |
| Extractor III | 16 | 33 |
| Stripper III | 10 | 19 |
| Electrolytic Cell for Co recovery | 20 | 30 |
| CSTR for the NiCO₃ Recovery | 4 | 6 |
| CSTR for MnO₂ precipitation | 10 | 21 |
| Reactor for Li₂CO₃ Recovery | 11 | 23 |

**Table 3**

| Filtration Devices and Their Dimensions | | |
|---|---|---|
| | **Surface (m²)** | |
| **Equipment** | 1000 t/y | 2000 t/y |
| Post-leaching filter press | 36 | 73 |
| Post-Ni precipitation filter press | 12 | 24 |
| Post- Mn precipitation filter press | 24 | 46 |
| Post-Li recovery filter press | 15 | 27 |
| Condenser | 62 | 84 |

**Table 4**

| Main Equipment for the Mechanical Pretreatments | | |
|---|---|---|
| | **Load Rate (kg/h)** | |
| **Equipment** | 1000 t/y | 2000 t/y |
| Blade crusher (90 kW) | 1.1 | 2.3 |
| Cutting mill (70 kW) | 0.9 | 2 |
| Eddy Currents Separator | 0.5 | 1 |
| Oven (2 m³) | 0.3 | 0.6 |

The process can be automated and the different steps can represent the steps of a software, therefore the whole process can be managed and optimized by means of a computer. The software can also be recorded in means that can be used by means of a computer. It is meant, thus, that the aim of the protection is broadened to such a software and to the means onto which said software is recorded.

Process, plant and electronic processing are available to the person expert in the field who, by reading the present description and by using his own expertise, is capable of finding the most suitable conditions and means to carry them out.

With the process and plant of the invention the aim of achieving a closed cycle is obtained, wherein the main components of exhausted batteries (steel, cobalt, nickel, manganese, lithium, copper, aluminium and graphite) are recovered as products that can be also used to manufacture new batteries and by optimizing the consumption of reagents that are re-generated and/or concentrated to be recirculated to the plants.

In particular, if sulphuric acid is used, it is regenerated within the process itself with a net power consumption almost equal to zero.

The only reagents consumed are the carbohydrate-type reducing agent possibly coming from industrial wastes which are transformed into recyclable, non-harmful carbon products, and CO₂.

The object of the innovation allows the concurrent treatment of primary lithium batteries and of lithium-ion and nickel-metal hydride accumulators.

The proposed process, in addition to being characterized by a noteworthy flexibility, allows, with respect to the other known processes, the concurrent recovery of Co, Cu, Li, Ni, e Mn. In addition, thanks to a solvent extraction section it is possible to obtain high purity grade products. The large quantity of recovered products, in addition to their purity grade, confer on the present process economical advantages which can be calculated in terms of return on investment and margin (see the process analysis).

The object of the innovation shows a low environmental impact since:
- It minimizes the amount of wastes coming from the plant by means of recirculation of the spent solutions at the head of the hydrometallurgical section.
- It allows using other industrial wastes such as reducing agents in the leaching operation.

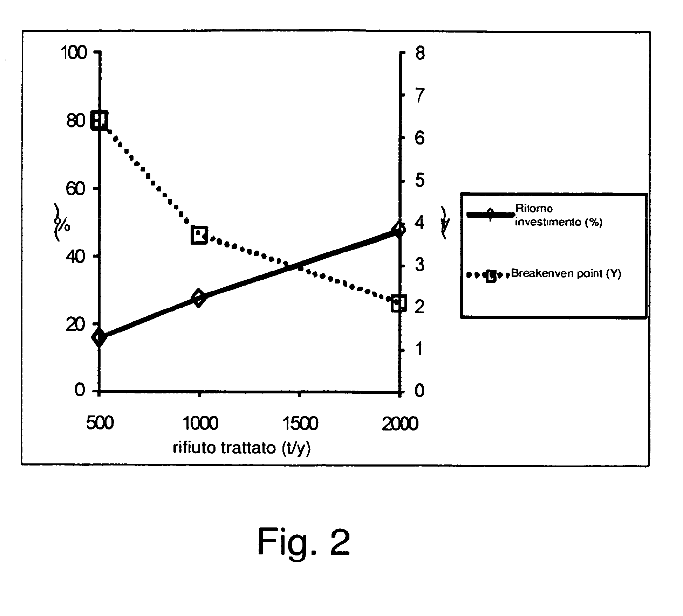

A preliminary analysis of this process shows that, by treating at least 1000 t/y of waste, equal to about 10% of the Italian market of accumulators and batteries other than the zinc-carbon and alkaline ones, the process becomes economically advantageous and attractive for investors. The economical advantages are the greater the bigger is the amount of treated waste. In Table 5 are shown the main economical results of the process analysis. In the graph of Figure 2 the economical potential of the process is shown as a function of the amount of processed waste.

**Table 5**

| Main Results of the Process Analysis | | | | | | | |
|---|---|---|---|---|---|---|---|
| Processed Waste (t/y) | Invested Capital ($) | Operative costs ($/y) | Total Income ($/y) | Gross Margin (%) | Return on Investment (%) | Breakeven point (y) | NPV ($) |
| 500 | 14858000 | 4360000 | 6004000 | 27.4 | 15.6 | 6.4 | -3728000 |
| 1000 | 19673000 | 6969000 | 12003000 | 50.3 | 27.4 | 3.7 | 12795000 |
| 2000 | 24372000 | 8307000 | 24031000 | 65.4 | 47.7 | 2.1 | 52802000 |

### Environmental Impact Analysis

The present process requires a consumption of resources which depends from the specific operations carried out and which is anyway proportional to the amount of treated waste. In an analogous way, the production of wastes increases with the increase of the potential of the treatment plant. The present analysis is anyway done by taking as the reference a plant that treats 1000 t/year of exhausted lithium batteries, lithium-ion accumulators and nickel-metal hydride accumulators.

### Raw Materials, Resources and Energy Requirements

The raw materials requirement is mainly linked to the leaching, precipitation and solvent extraction operations, and can vary with the modulation of some operative variables such as discharge currents and recirculation currents. A list of the main raw materials and of their required quantities for an adequate process function is shown in Table 6.

**Table 6**

| **Requirements of Raw Materials** | |
|---|---|
| **Raw Materials** | **t/y** |
| H₂SO₄ 98% | 1600-1800 |
| Glucose | 40 |
| Water | 2500 |
| Sodium Carbonate | 650-850 |
| Cyanex 272 | 10 |
| Kerosene | 25 |

An optimal management of the operations of the present hydrometallurgical process envisages using service fluids such as steam and cold water. By means of the steam the sensitive needed heat is furnished to operate the leaching operation at the temperature of 90°C. In addition, such a fluid is indispensable for furnishing the latent heat needed for evaporating water in the CoSO₄ (possible) and Li₂CO₃ crystallization operation. Cold water is needed in the crystallization operations to generate an adequate rate of under-cooling so that the formation of crystals of the different salts is determined. In Table 3 the likely requirements of raw materials are shown.

**Table 7**

| **Annual Requirements of Resources** | |
|---|---|
| **Resources** | **t/y** |
| Steam leaching | 360 |
| Steam crystalliz. CoSO₄ | 3800 |
| Steam crystalliz. Li₂CO₃ | 850 |
| Steam electrolysis | 150 |
| Cold Water cr. CoSO₄ | 11500 |
| Cold Water cr. Li₂CO₃ | 24600 |

Another essential aspect of the present treatment process is represented by the electrical need. Actually, at least 2,000,000 kWh/year are necessary for carrying out the process. Most of such requirements is linked to the electrolytic process since it requires about 2.2-2.5 kWh per kg of cobalt; anyway the requirements linked to the remaining operations (moving and stirring of fluids) are considerable. A summary of the energetic consumption is shown in Table 8.

**Table 8**

| **Process Energetic Requirements** | |
|---|---|
| **Energy** | **MWh/y** |
| Extraction | 3.5 |
| Stripping | 2 |
| Crystallization | 5 |
| Surplus | 7 |
| Electrolysis | 2000-3000 |
| Surplus | 1000 |
| **Total** | 3000-4000 |

### Waste Production

The main currents coming from the plants (post-stripping solvent, electrolysis waters) are almost completely recirculated and used again for their original purposes subject to make-up with fresh product. Refluent production is therefore limited to the discharge currents. On the contrary, solid wastes are made of muds generated during the precipitation operation and by the inert residues (plastics, graphite, etc.) form the leaching operation. The emissions into the atmosphere are limited to carbon dioxide produced by carbonates acidification. In Table 9 the waste production linked to the present process is shown.

**Table 9**

| **Annual Production of Wastes** | |
|---|---|
| **Wastes** | **t/y** |
| Solvent/discharge diluent (2%) | 500 |
| Solid Wastes | 250 |
| CO₂ Emission | 35 |

## Claims

1. Process for treating exhausted accumulators and batteries based on nickel or lithium comprising, in a cooperating relationship, (1) physical preliminary operations, (2) chemical extraction and recovery operations, (3) treatment operations of the solutions to be recirculated, said operations comprising the steps of:
- Grinding and screening thus obtaining a coarse fraction > 1mm and a fine fraction < 1mm being serially carried out on the coarse fraction a magnetic separation of ferrous metals, a thermal treatment at temperatures ≤400°C for the paper and plastic combustion (or gravimetric separation), and a densimetric separation of copper, being the fine fraction sent to the following steps;
- Acidic-reducing leaching, by using as the reducing agent hydrogen peroxide or a carbohydrate chosen from the group comprising monosaccharides, oligosaccharides, polysaccharides and mixtures thereof, also coming from agri-food and paper industry wastes;
- Primary purification of the leach liquor coming from the leaching step by means of Fe and Al hydroxides precipitation at pH 4-7, preferably pH 5.0 5.5, or alternatively, aluminium separation before leaching by means of alkaline rinse and recovery thereof in the form of alum;
- Secondary purification with cobalt separation from the leach liquor coming from the primary purification by means of a first extraction with an aprotic apolar organic solvent, preferably kerosene, in the presence of a complexing agent, preferably a phosphinic acid derivative, through successive extraction and stripping cycles; obtaining from the first extraction a final aqueous phase rich in cobalt, the intermediate aqueous phases pooled together undergoing a second extraction in an apolar aprotic solvent in the presence of a complexing agent, preferably based on phosphinic acid; obtaining from the second extraction two different aqueous phases, one rich in nickel the other one in manganese and lithium; being carried out on their respective aqueous phases further steps of:
- Cobalt recovery by electrolysis or, alternatively, in the form of sulphate or carbonate; the spent solution from the cobalt electrolysis being preferably recirculated at the head of the leaching reactor;
- Nickel recovery by electrolysis, or, alternatively, in the form of sulphate or carbonate; the spent solution from the nickel electrolysis being preferably recirculated at the head of the leaching reactor;
- Manganese recovery in the form of dioxide by precipitation at alkaline pH, preferably pH 8-11, more preterably pH 9, in an oxidizing atmosphere; alternatively, manganese recovery as a carbonate (MnCO₃);
- Lithium recovery by means of precipitation and/or crystallization, from the leach liquor coming from the secondary purification in addition to the above mentioned different aqueous phases, optionally Li precipitation-crystallization can be preceded by an inverse osmosis operation to concentrate the starting solution,
- Optionally, periodical effluent treatment coming from the electrolysis steps before recycling to the leaching reactor by means of a Fenton type reagent or crystallization.

2. The process according to claim 1 wherein the grinding step is preceded by a thermal pre-treatment at the temperature of 300-400°C for 1 hour in inert atmosphere, preferably nitrogen.

3. The process according to claims 1-2, wherein the screening is carried out in two steps separated from each other by a crushing carried out on the fraction > 1 mm that originated from the first screening.

4. The process according to claims 1-3, wherein the leaching operation is carried out by operating under stirring, at the temperature of at least 60°C, preferably 70-90°C, and in acidic-reducing conditions, preferably with a ratio sulphuric acid and fine of 2: 1.

5. The process according to claims 1-4, wherein the leaching operation is preceded by a rinse phase at alkaline pH, preferably pH 12,5-13 for about 2 hours for the aluminium recovery, which is subsequently precipitated in the form of alum.

6. The process according to claims 1-5, wherein after leaching the recovery of rare-earths is carried out by addition of alkali to a pH in between 0.8 and 3.0, preferably in between 1.5 and 3, more preferably in between 1.0-2.0.

7. The process according to claims 1-6, wherein the cobalt recovery by electrolysis is carried out in potentiostatic conditions with cathode potentials comprised in between 0.9 V and 1.3 V, at pH 4-4,5, at room temperature and under moderate stirring using carbon steel or aluminium as the cathode and graphite or antimonium steel as the anode.

8. The process according to claims 1-7, wherein nickel recovery od carried out by working at cathode potentials comprised in between 0.9 and 1,3 V and operating at pH values comprised in between 4 and 5, at the temperature of 30-40°C on a nickel steel, copper or aluminium cathode.

9. The process according to claim 8, wherein the lithium recovery is carried out in the solution coming from the manganese recovery, acidified to pH 7-8 and then added with a saturated solution of Na₂CO₃ to pH 8-9.

10. The process according to claims 1-9, wherein a periodical crystallization of the currents coming from the electrolysis reactors is carried out by evaporating about 50% of the volume of water to be recirculated and by subsequently cooling such a current to a temperature of 10-15°C.

11. The process according to claims 1-10, wherein the manganese recovery step is carried out before the cobalt separation by means of extraction with a, organic apolar aprotic solvent, preferably kerosene, in the presence of a complexing agent, preferably a derivative of phosphoric acid, through multiple extractive steps and a final stripping of all the organic phases.

12. The process according to claim 11, wherein manganese recovery is carried out in the form of a dioxide by precipitation at alkaline pH, preferably pH 8-11, more preferably about pH 9, under an oxidizing atmosphere; alternatively, manganese recovery as a carbonate (MnCO₃).

## Patentansprüche

1. Verfahren zur Behandlung erschöpfter Akkumulatoren und Batterien, die auf Nickel oder Lithium basieren, mit, in zusammenwirkender Beziehung, (1) physikalischen Vorbehandlungsvorgängen, (2) chemischen Extraktions- und Rückgewinnungsvorgängen, (3) Behandlungsvorgängen der Lösungen, die zu rezirkulieren sind, wobei die Vorgänge die Schritte aufweisen:
- Mahlen und Sieben der so erhaltenen Grobfraktion, > 1mm, und einer Feinfraktion, < 1mm, aufeinanderfolgendes Durchführen an der Grobfraktion einer magnetischen Trennung von eisenhaltigen Materialien, einer thermischen Behandlung bei Temperaturen ≤ 400 °C für das Papier und Kunststoffverbrennung (oder gravimetrische Trennung) und einer Dichtetrennung von Kupfer, wobei die Feinfraktion den folgenden Schritten ausgesetzt wird
- säurereduzierendes Auslaugen unter Verwendung als Reduktionsmittel von Wasserstoffperoxyd oder eines Kohlenhydrats, das ausgewählt ist aus der Gruppe, die Monosaccharide, Oligosaccharide, Polysaccharide und Mischungen daraus enthält, die auch aus Agrar- und Ernährungswirtschaft und Papierindustrieabfällen kommen,
- Hauptreinigung der Laugungsflüssigkeit, die aus dem Auslaugungsschritt kommt, mittels Fe- und Al-Hydroxydausfällung bei pH 4-7, vorzugsweise pH 5,0-5,5, oder alternativ Aluminiumtrennung vor dem Auslaugen mittels Alkalispülung und Wiedergewinnung davon in Form von Alaun,
- Sekundärreinigung mit Kobaltabtrennung aus der Laugungsflüssigkeit, die aus der Primärreinigung kommt, mittels einer ersten Extraktion mit einem protonenfreien apolaren organischen Lösungsmittel, vorzugsweise Kerosin, in Anwesenheit eines komplexbildenden Mittels, vorzugsweise einem Phosphinsäurederivat durch aufeinanderfolgende Extraktions- und Ablösezyklen, des Erhaltens aus der ersten Extraktion einer finalen wässrigen Phase, die reich an Kobalt ist, wobei wässrige Zwischenphasen zusammengemischt werden und einer zweiten Extraktion in einem apolaren protonenfrelen Lösungsmittel bei Anwesenheit eines komplexbildenden Mittels ausgesetzt werden, vorzugsweise basierend auf Phosphinsäure, dem Erhalten aus der zweiten Extraktion von zwei unterschiedlichen wässrigen Phasen, wobei eine reich an Nickel Ist, die andere an Mangan und Lithium, wobei In ihren jeweiligen wässrigen Phasen weitere Schritte durchgeführt werden:
- Kobaltwiedergewinnung durch Elektrolyse oder alternativ in Form von Sulfat oder Karbonat, wobei die eingesetzte Lösung aus der Kobaltelektrolyse vorzugsweise an den Kopf des Auslaugungsreaktors rezirkuliert wird,
- Nickelwiedergewinnung durch Elektrolyse oder alternativ in Form von Sulfat oder Karbonat, wobei die eingesetzte Lösung von der Nickelelektrolyse vorzugsweise an den Kopf des Auslaugungsreaktors rezirkuliert wird,
- Manganwiedergewinnung In Form von Dioxid durch Ausfällung bei einem alkalischen pH, vorzugsweise pH 8-11, weiter vorzuziehen pH 9, in einer oxidierenden Atmosphäre, alternativ Manganwiedergewinnung als ein Karbonat (MnCO₃),
- Lithiumwiedergewinnung mittels Ausfällung und/oder Kristallisierung aus der Laugungsflüssigkeit, die von der zweiten Reinigung stammt, zusätzlich zu den oben genannten unterschiedlichen wässrigen Phasen, wobei optlonal der Li-Ausfällungs-Kristallisation ein inverser Osmosevorgang vorangeht, um die Startlösung zu konzentrieren,
- optional periodische Behandlung von flüssigen Ableitungen, die aus dem Elektrolyseschritt stammen, vor der Rezyklierung an den Auslaugungsreaktor mittels eines Reagenz vom Fentontyp oder Kristallisation.

2. Verfahren nach Anspruch 1, wobei dem Mahlschritt eine Wärmevorbehandlung bei einer Temperatur von 300-400 °C für 1 Stunde in einer Inertatmosphäre, vorzugsweise Stickstoff, vorangeht.

3. Verfahren nach Anspruch 1-2, wobei das Sieben in zwei Schritten durchgeführt wird, die voneinander durch eine Zerkleinerung getrennt sind, die an der Frakton > 1mm durchgeführt wird, die von dem ersten Sieben stammt.

4. Verfahren nach Anspruch 1-3, wobei der Auslaugungsvorgang durch Betreiben unter Rühren bei der Temperatur von zumindest 60 °C, vorzugsweise 70-90 °C in säurereduzierenden Bedingungen durchgeführt wird, vorzugsweise mit einem Verhältnis von Schwefelsäure zum Rest von 2: 1.

5. Verfahren nach Anspruch 1-4, wobei dem Auslaugungsvorgang eine Spülphase bei basischem pH vorangeht, vorzugsweise pH 12,5-13 für etwa 2 Stunden zur Aluminiumwiedergewinnung, das anschließend in Form von Alaun ausgefällt wird.

6. Verfahren nach Anspruch 1-5, wobei nach dem Auslaugen die Wiedergewinnung von seltenen Erden durch Zusatz von Alkali zu einem pH von zwischen 0,8 und 3,0 durchgeführt wird, vorzugsweise zwischen 1,5 und 3 und weiter vorzuziehen zwischen 1,0-2,0.

7. Verfahren nach Anspruch 1-6, wobei die Kobaltwiedergewinnung durch Elektrolyse in potentiostatischen Bedingungen mit Kathodenpotentialen zwischen 0,9 V und 1,3 V bei einem pH von 4-4,5 bei Raumtemperatur und unter moderatem Rühren unter Verwendung von Kohlenstoffstahl oder Aluminium als Kathode und Graphit oder Antimonstahl als Anode durchgeführt wird.

8. Verfahren nach Anspruch 1-7, wobei die Nickelrückgewinnung bei Arbeiten mit Kathodenpotentialen zwischen 0,9 und 1,3 V und Bearbeiten bei pH-Werten von zwischen 4 und 5 bei der Temperatur von 30-40 °C an einer Nickelstahl-, Kupfer - oder Aluminiumkathode durchgeführt wird.

9. Verfahren nach Anspruch 8, wobei die Lithiumwiedergewinnung In der Lösung durchgeführt wird, die aus der Manganwiedergewinnung stammt, die auf pH 7-8 gesäuert wird und der dann eine gesättigte Lösung von Na₂CO₃ auf pH 8-9 zugefügt wird.

10. Verfahren nach Anspruch 1-9, wobei eine periodische Kristallisierung der Ströme, die aus den Elektrolysereaktoren kommt, bei Verdampfung von 50 % des Volumens von Wasser, das zu rezirkulleren ist, und durch anschließendes Abkühlen eines solchen Stroms auf eine Temperatur von 10 bis 15 °C durchgeführt wird.

11. Verfahren nach Anspruch 1-10, wobei der Manganwiedergewinnungsschritt vor der Kobaltabtrennung mittels Extraktion mit einem organischen apolaren protonenfreien Lösungsmittel, vorzugsweise Kerosin, bei Anwesenheit eines komplexbildenden Mittels, vorzugsweise einem Derivat von Phosphorsäure durch mehrere Extraktionsschritte und durch finale Strippung aller organischer Phasen, durchgeführt wird.

12. Verfahren nach Anspruch 11, wobei die Manganwiedergewinnung in Form eines Dioxids durch Ausfällung bei einem basischen pH durchgeführt wird, vorzugsweise bei pH 8-11, insbesondere vorzuziehen bei etwa pH 9, unter einer oxidierenden Atmosphäre, alternativ Manganwledergewinnung als ein Karbonat (MnCO₃).

## Revendications

1. Procédé de traitement d'accumulateurs et de batteries usagés à base de nickel ou de lithium comprenant, en coopération, (1) des opérations physiques préliminaires, (2) des opérations d'extraction et de récupération chimiques, (3) des opérations de traitement des solutions à recycler, lesdites opérations comprenant les étapes :
- de broyage et de tri, obtenant ainsi une fraction grossière > 1 mm et une fraction fine < 1mm obtenues en série à partir de la fraction grossière d'une séparation magnétique de métaux ferreux, d'un traitement thermique à des températures ≤400°C pour la combustion du papier et du plastique (ou une séparation gravimétrique), et d'une séparation densimétrique du cuivre, ceci étant la fraction fine utilisée pour les étapes suivantes ;
- lixiviation acido-réductrice, en utilisant comme agent réducteur du peroxyde d'hydrogène ou un hydrate de carbone choisi parmi le groupe comprenant les monosaccharides, les oligosaccharides, les polysacharides et mélanges de ceux-ci, pouvant également provenir de déchets de l'industrie agroalimentaire et du papier;
- purification primaire de la liqueur de lixiviation, résultant de l'étape de lixiviation, par la précipitation des hydroxydes de Fe et d'Al à pH 4-7, de préférence pH 5,0-5,5, ou alternativement, par séparation de l'aluminium, avant lixiviation, par rinçage alcalin et récupération de celui-ci sous la forme d'alun ;
- purification secondaire avec une séparation du cobalt de la liqueur de lixiviation, résultant de la purification primaire, par une première extraction avec un solvant organique aprotique apolaire, de préférence du kérosène, en présence d'un agent complexant, de préférence un dérivé d'acide phosphinique, par cycles successifs d'extraction et de lavage ;
obtention d'une phase aqueuse finale riche en cobalt à partir de la première extraction, les phases aqueuses intermédiaires regroupées ensemble subissant une seconde extraction dans un solvant aprotique apolaire en présence d'un agent complexant, de préférence basé sur l'acide phosphinique ;
obtention de deux phases aqueuses différentes à partir de la seconde extraction, une riche en nickel, l'autre riche en manganèse et en lithium; lesquels sont extraits de leurs phases aqueuses respectives par les étapes supplémentaires suivantes :
- récupération du cobalt par électrolyse ou, alternativement, sous la forme de sulfate ou de carbonate ; les solutions de mouillage résultant de l'électrolyse du cobalt étant de préférence recyclée en tête du réacteur de lixiviation ;
- récupération du nickel par électrolyse ou, alternativement, sous la forme de sulfate ou de carbonate ; la solution utilisée, résultant de l'électrolyse du nickel, étant de préférence recyclée en tête du réacteur de lixiviation ;
- récupération du manganèse sous la forme de dioxyde par précipitation à pH alcalin, de préférence pH 8-11, plus préférablement pH 9, en atmosphère oxydante ; autrement, récupération du manganèse en carbonate (MnCO₃) ;
- récupération du lithium par précipitation et/ou cristallisation, à partir de la liqueur de lixiviation résultant de la purification secondaire en plus des différentes phases aqueuses mentionnées ci-dessus, éventuellement la précipitation-cristallisation du Li pouvant être précédée d'une opération d'osmose inverse pour concentrer la solution de départ,
- éventuellement, traitement périodique de l'effluent résultant des étapes d'électrolyse avant recyclage au réacteur de lixiviation par un réactif de type Fenton ou par cristallisation.

2. Procédé selon la revendication 1, dans lequel l'étape de broyage est précédée d'un pré-traitement thermique à la température de 300-400°C pendant 1 heure en atmosphère inerte, de préférence de l'azote.

3. Procédé selon la revendication 1 ou 2, dans lequel le tri est effectué en deux étapes séparées l'une de l'autre par un broyage effectué sur la fraction > 1mm venant du premier tri.

4. Procédé selon l'une des revendications 1 à 3, dans lequel l'opération de lixiviation est effectuée en opérant sous agitation, à la température d'au moins 60°C, de préférence 70-90°C, et en conditions acido-réductrices, de préférence avec un rapport acide sulphurique et fraction fine de 2 :1.

5. Procédé selon l'une des revendications 1 à 4, dans lequel l'opération de lixiviation est précédée d'une phase de rinçage à pH alcalin, de préférence pH 12,5-13 pendant environ 2 heures pour la récupération de l'aluminium, qui est ensuite précipité sous forme d'alun.

6. Procédé selon l'une des revendications 1 à 5, dans lequel, après lixiviation, la récupération des terres rares est effectuée par ajout d'un alcalin jusqu'à un pH entre 0,8 et 3,0, de préférence entre 1,5 et 3, plus préférablement entre 1,0-2,0.

7. Procédé selon l'une des revendications 1 à 6, dans lequel la récupération du cobalt par électrolyse est effectuée en conditions potentiostatiques avec des potentiels de cathode compris entre 0,9 V et 1,3 V, à pH 4-4,5, à température ambiante et sous agitation modérée en utilisant de l'acier au carbone ou de l'aluminium comme cathode et du graphite ou de l'acier à l'antimoine comme anode.

8. Procédé selon l'une des revendications 1 à 7, dans lequel la récupération du nickel est effectuée en travaillant à des potentiels de cathode compris entre 0,9 V et 1,3 V et opérant à des valeurs de pH comprises entre 4 et 5, à la température de 30-40°C sur une cathode en acier au nickel, en cuivre ou en aluminium.

9. Procédé selon la revendication 8, dans lequel la récupération du lithium est effectuée dans la solution résultant de la récupération du manganèse, acidifiée jusqu'à pH 7-8 et à laquelle est ajoutée ensuite une solution saturée de Na₂CO₃ jusqu'à pH 8-9.

10. Procédé selon l'une des revendications 1 à 9, dans lequel une cristallisation périodique des courants résultant des réacteurs d'électrolyse est effectuée en évaporant environ 50% du volume d'eau à recycler et en refroidissant ensuite un tel courant à une température de 10-15°C.

11. Procédé selon l'une des revendications 1 à 10, dans lequel l'étape de récupération du manganèse est effectuée avant la séparation du cobalt par extraction avec un solvant organique apolaire aprotique, de préférence du kérosène, en présence d'un agent complexifiant, de préférence un dérivé de l'acide phosphorique, par de multiples étapes d'extraction et une étape finale de récupération de toutes les phases organiques.

12. Procédé selon la revendication 11, dans lequel la récupération du manganèse est effectuée sous la forme d'un dioxyde par précipitation à pH alcalin, de préférence pH 8-11, plus préférablement pH 9, en atmosphère oxydante ; alternativement, récupération du manganèse en tant que carbonate (MnCO₃).
